# FASCICULE DE BREVET EUROPEEN

(11) **EP 4 172 008 B1**
(45) Date de publication et mention de la délivrance du brevet: **02.10.2024**
(21) Numéro de dépôt: 20803568.3
(22) Date de dépôt: 12.11.2020
(51) Int. Cl.: B60S 1/56, G01S 17/931, G02B 27/00

(54) **DISPOSITIF D'ESSUYAGE POUR SYSTÈME DE DÉTECTION**
WISCHVORRICHTUNG FÜR EIN DETEKTIONSSYSTEM
WIPING DEVICE FOR A DETECTION SYSTEM

(30) Priorité: 24.06.2020 FR 1914740
(43) Date de publication de la demande: 03.05.2023
(73) Titulaire: Valeo Systèmes d'Essuyage, 78322 Le Mesnil Saint Denis (FR)
(72) Inventeur: TREBOUET, Marcel, 78322 LE MESNIL SAINT DENIS (FR)
(74) Mandataire: Valeo Visibility
(86) Numéro de dépôt international: PCT/EP2020/081840
(87) Numéro de publication internationale: WO 2021/121791

(56) Documents cités:
- CN-A- 107 578 680
- CN-A- 108 196 480
- CN-A- 108 583 453
- DE-A1- 102017 221 530
- US-A- 5 274 876
- US-A1- 2018 215 350

## Description

La présente invention se rapporte au domaine des dispositifs d'essuyage d'un véhicule, et concerne plus spécifiquement les dispositifs d'essuyage des systèmes optiques intégrés au véhicule.

Avec la progression de l'innovation du marché de l'automobile, le nombre de systèmes optiques présents dans un véhicule, notamment des systèmes de détection tels que les radars de recul ou les systèmes Lidar, a considérablement augmenté ces dernières années. A ce titre, le besoin de nettoyer de tels systèmes optiques s'est rapidement fait ressentir.

Il est connu de mettre en place des dispositifs d'essuyage muni d'un bras et d'un balai d'essuyage au niveau d'un système optique. Le balai d'essuyage, entraîné par un moteur nettoie alors directement la surface optique du système optique ou un écran de protection placé en regard du système optique. Ainsi, en cas d'intempéries ou de nécessité de nettoyage, le dispositif d'essuyage assure un champ de visibilité optimal au système optique, le balai d'essuyage se déplaçant contre la surface optique ou l'écran de protection.

Le balai d'essuyage est entraîné par un ensemble d'entraînement, lui-même actionné par un moteur d'entraînement. Dans le système selon l'invention, il est nécessaire de créer un mouvement rectiligne du balai d'essuyage à partir d'un mouvement rotatif initié par le moteur d'entraînement. Une telle configuration peut s'avérer compliquée à mettre en place, notamment au niveau de l'encombrement mécanique et/ou de l'interférence mécanique avec les autres composants du système, par exemple au niveau de la face visible de ce dernier.

D'autres dispositifs d'essuyage sont décrits dans les documents CN 108583453 et US5274876.

La présente invention permet de mettre en place ladite configuration en proposant un dispositif d'essuyage pour système de détection d'un véhicule, comprenant un bras, un balai d'essuyage, un moteur d'entraînement du bras et un ensemble d'entraînement comportant un chariot à déplacement rectiligne et reliant le moteur d'entraînement et le bras, ledit bras étant porté par ledit chariot, caractérisé en ce que l'ensemble d'entraînement comprend au moins une liaison pivot et au moins une liaison glissière interposées entre le moteur d'entraînement et le bras.

L'ensemble d'entraînement comprend une pluralité d'éléments entraînant un mouvement du balai d'essuyage, par exemple contre une surface de nettoyage. L'ensemble d'entraînement a pour fonction de convertir un mouvement initial rotatif effectué par le moteur d'entraînement en un mouvement rectiligne du bras, et par analogie du balai d'essuyage contre la surface de nettoyage. Le chariot portant le bras, le mouvement de ce dernier est donc dépendant d'un mouvement du chariot. Le chariot effectue donc un mouvement rectiligne, en se déplaçant par exemple le long d'un guide, rectiligne également. Le mouvement rectiligne du chariot se fait selon deux sens de déplacement le long du guide. Cela permet au balai d'essuyage d'effectuer des mouvements de va-et-vient contre la surface de nettoyage.

La liaison pivot et la liaison glissière permettent à l'ensemble d'entraînement de convertir le mouvement rotatif du moteur d'entraînement en un mouvement rectiligne du chariot, et ce sans entraîner d'interférences entre le mouvement rotatif et le mouvement rectiligne. Autrement dit, le mouvement rectiligne est créé à partir du mouvement rotatif, mais n'est pas impacté par les rotations du mouvement rotatif. La liaison pivot permet de mettre en mouvement le chariot, tandis que la liaison glissière assiste la mise en mouvement du chariot en éliminant toute interférence entre le mouvement rotatif et le mouvement rectiligne. Le balai d'essuyage peut ainsi être entraîné selon le mouvement rectiligne et assurer sa fonction d'essuyage.

Selon l'invention, l'ensemble d'entraînement comprend au moins un levier, la liaison pivot étant disposée entre le levier et le chariot. Le levier fait partie de l'ensemble d'entraînement et participe à la conversion du mouvement d'origine rotative en mouvement rectiligne. La liaison pivot permet de mettre en mouvement le chariot. Le levier étant néanmoins en libre rotation par rapport au chariot, ce dernier ne suit donc pas nécessairement le même mouvement que celui du levier.

Selon une caractéristique de l'invention, la liaison glissière est disposée entre le moteur d'entraînement et le levier. Le moteur d'entraînement initie le mouvement rotatif, qui est transmis de manière directe ou indirecte au levier. La liaison glissière située entre le moteur d'entraînement et le levier correspond à une première variante, où la liaison pivot et la liaison glissière sont situées sur deux points différents de l'ensemble d'entraînement.

Selon une caractéristique de l'invention, l'ensemble d'entraînement comprend au moins un support de levier lié en rotation à un arbre de rotation du moteur d'entraînement, le levier comprenant une première extrémité longitudinale, la liaison glissière étant réalisée par un coulissement de la première extrémité longitudinale par rapport au support de levier. L'ensemble d'entraînement selon l'invention comprend donc de manière non exhaustive le support de levier, le levier et le chariot. Le support de levier est lié de manière directe ou indirecte au moteur d'entraînement et est entraîné en rotation par ce dernier, plus particulièrement par l'arbre de rotation du moteur d'entraînement. Le levier présente une dimension principale s'étendant entre le support de levier et le chariot, correspondant à une dimension longitudinale du levier. La première extrémité longitudinale du levier est donc l'extrémité du levier interagissant avec le support de levier. La première extrémité longitudinale du levier est liée au support de levier et forme avec ce dernier la liaison glissière. Autrement dit, le levier est apte à coulisser au sein du support de levier.

Selon une caractéristique de l'invention, le support de levier comprend une rainure dans laquelle est logée la première extrémité longitudinale du levier, la rainure s'étendant le long d'un axe d'extension sécant avec un axe de rotation de l'arbre de rotation du moteur d'entraînement. La rainure présente des dimensions adaptées pour que la première extrémité longitudinale du levier puisse y être logée et y coulisser librement. La liaison glissière entre le support de levier et le levier permet ainsi uniquement le déplacement du levier par coulissement, tout autre potentiel mouvement du levier étant interdit par la rainure du support de levier. Le moteur d'entraînement transmet son mouvement rotatif au support de levier, ce dernier entraînant à son tour le levier selon un mouvement de rotation.

Selon une caractéristique de l'invention, l'arbre de rotation du moteur d'entraînement comprend une joue solidaire du support de levier et qui ferme la rainure. La joue est disposée autour de l'arbre de rotation du moteur d'entraînement et pivote selon un mouvement de rotation identique à celui de l'arbre de rotation. C'est ainsi la joue qui, par contact direct avec le support de levier, entraîne ce dernier en rotation. Par ailleurs la joue s'étend de manière à couvrir la rainure, empêchant ainsi le levier de sortir de celle-ci.

Selon une caractéristique de l'invention, la liaison glissière est disposée entre le chariot et le levier. Dans une deuxième variante du premier mode de réalisation du dispositif d'essuyage selon l'invention, la liaison pivot et la liaison glissière sont situées au même niveau ou sensiblement au même niveau de l'ensemble d'entraînement, à savoir au niveau de la liaison entre le levier et le chariot. La deuxième variante permet également d'entraîner un mouvement rectiligne du chariot à partir d'un mouvement rotatif initié par le moteur d'entraînement et transmis par le levier.

Selon une caractéristique de l'invention, l'ensemble d'entraînement comprend un support de levier, le levier étant relié au support de levier par une liaison complète. Dans cette deuxième variante, étant donné que la liaison glissière est disposée entre le chariot et le levier, il n'y a plus de liaison glissière entre le moteur d'entraînement et le levier. Ainsi, l'ensemble d'entraînement peut par exemple comprendre un support de levier avec une rainure, mais cette rainure ne sert qu'au logement et au maintien du levier. Autrement dit, la liaison complète empêche également le coulissement du levier au sein de la rainure. Avec la joue refermant la rainure, le levier est donc fixe par rapport au moteur d'entraînement. Le seul mouvement est donc le mouvement de rotation initié par le moteur d'entraînement et transmis par le levier.

Selon une caractéristique de l'invention, le chariot comprend un pivot, le levier comprenant une seconde extrémité longitudinale qui comporte une lumière, la liaison glissière et la liaison pivot étant réalisées par un coulissement et une rotation de la deuxième extrémité longitudinale par rapport au pivot. Dans la deuxième variante, la première extrémité longitudinale du levier est maintenue au moteur d'entraînement ou au support de levier de manière fixe. C'est donc la deuxième extrémité longitudinale du levier qui, avec le chariot, forme à la fois la liaison pivot et la liaison glissière. Pour cela, la deuxième extrémité longitudinale du levier comprend une lumière dont les dimensions permettent l'insertion du pivot du chariot. La lumière présente une forme oblongue telle que le pivot du chariot ne peut coulisser au sein de la lumière que selon une seule direction, formant la liaison glissière. La lumière peut toutefois pivoter librement autour du pivot, formant ainsi la liaison pivot. Ainsi, grâce à l'interaction entre la lumière de la deuxième extrémité longitudinale du levier et le pivot du chariot, le levier est apte à entraîner le chariot en mouvement grâce à la liaison pivot, le tout sans interférence mécanique grâce à la liaison glissière.

Selon une caractéristique de l'invention, le moteur d'entraînement est un moteur réversible. Autrement dit, le support de levier, entraîné par le moteur d'entraînement, se déplace selon un sens horaire et selon un sens antihoraire en alternant les sens au cours du temps. Par analogie, le levier est donc également entraîné selon un mouvement rotatif réversible. C'est la réversibilité du mouvement rotatif du support de levier et du levier qui permet au chariot d'effectuer des mouvements rectilignes selon les deux sens de déplacement, et ainsi, en portant le bras, d'entraîner le balai d'essuyage selon un mouvement rectiligne de va-et-vient contre la surface à nettoyer.

Selon une caractéristique de l'invention, le moteur d'entraînement comprend un arbre de rotation qui entraîne l'ensemble d'entraînement, l'arbre de rotation s'étendant le long d'un axe de rotation qui coupe un plan de déplacement du levier. Par plan de déplacement du levier, on entend un plan formé à partir des axes selon lesquels le levier est entraîné en mouvement. Le mouvement rotatif du moteur d'entraînement se traduit par une rotation de l'arbre de rotation autour de son axe de rotation. C'est la rotation de l'arbre de rotation qui entraîne le mouvement de rotation du support de levier. Le levier étant lié au support de levier par le biais de la liaison glissière, l'axe de rotation de l'arbre de rotation et le plan de déplacement du levier sont sécants entre eux. Il s'agit d'un premier mode de réalisation du dispositif d'essuyage selon l'invention relatif à la position du moteur d'entraînement par rapport à l'ensemble d'entraînement.

Selon une caractéristique de l'invention, l'ensemble d'entraînement comprend au moins une roue dentée mise en mouvement par un arbre de rotation du moteur d'entraînement, une bielle entraînée par la roue dentée, et un palier d'entraînement mis en mouvement par la bielle et qui entraîne le levier. Il s'agit d'un deuxième mode de réalisation du dispositif d'essuyage permettant de générer un mouvement rotatif réversible de l'ensemble d'entraînement à partir d'un mouvement rotatif unilatéral du moteur d'entraînement. L'arbre de rotation du moteur d'entraînement peut par exemple être une vis sans fin dont la rotation entraîne la roue dentée. La bielle est liée à la roue dentée au niveau d'une face de cette dernière. La liaison entre la bielle et la roue dentée est décalée par rapport au centre de celle-ci. Ainsi, lorsque la roue dentée est entraînée en rotation, une extrémité de la bielle liée à la roue dentée est également entraînée en rotation. Une autre extrémité de la bielle, opposée à la roue dentée est liée au palier d'entraînement. Le mécanisme de la bielle permet de créer un mouvement rotatif réversible au palier d'entraînement, qui de ce fait entraîne également le levier selon un mouvement rotatif réversible. Ainsi, à partir du mouvement rotatif unilatéral du moteur d'entraînement, le levier est entraîné selon un mouvement rotatif réversible.

Selon une caractéristique de l'invention, le palier d'entraînement comprend un maneton logé dans un trou oblong ménagé sur le levier. Le levier, entraîné en mouvement rotatif, coulisse via la liaison entre le trou oblong et le maneton, un degré de liberté du levier étant stoppé par le maneton.

Selon une caractéristique de l'invention, l'arbre de rotation qui entraîne l'ensemble d'entraînement s'étend le long d'un axe de rotation parallèle à un plan de déplacement du levier. Dans ce deuxième mode de réalisation, l'axe de rotation de l'arbre de rotation du moteur d'entraînement est parallèle au plan de déplacement du levier mais sans toutefois être sécant. Ce parallélisme s'explique par le fait que l'arbre de rotation du moteur d'entraînement s'étend principalement selon une direction parallèle au mouvement de va-et-vient du balai d'essuyage.

Selon une caractéristique de l'invention, le moteur d'entraînement est un moteur à sens de rotation unidirectionnel. Autrement dit, le moteur d'entraînement tourne soit selon un sens horaire, soit selon un sens antihoraire, et l'ensemble d'entraînement est apte à convertir un mouvement rotatif unidirectionnel du moteur d'entraînement en un mouvement rotatif réversible. Ainsi, quel que soit le type de moteur d'entraînement, l'essentiel est de finalement obtenir un mouvement réversible afin que le balai d'essuyage puisse effectuer son mouvement de va-et-vient contre la surface de nettoyage.

Selon une caractéristique de l'invention, le chariot est configuré pour se déplacer de manière rectiligne sur un guide. Le guide permet d'assurer le maintien du mouvement rectiligne du chariot. Le guide est fixe et s'étend principalement de manière parallèle à la surface de nettoyage. Le chariot peut par exemple comprendre un alésage correspondant aux dimensions du guide afin que ce dernier puisse y être glissé. Ainsi, lorsque le chariot est mis en mouvement par le levier, le chariot se meut le long du guide. Le mouvement rectiligne du chariot est ainsi maintenu parallèle à la surface de nettoyage.

L'invention couvre également un système de détection d'un véhicule, comprenant un dispositif optique de détection et un dispositif d'essuyage tel que décrit précédemment. Le dispositif optique de détection peut par exemple être un radar de recul ou un dispositif de type Lidar ou plus généralement un capteur de l'environnement du véhicule. A ce titre, le dispositif optique de détection nécessite d'être nettoyé régulièrement afin d'avoir un champ de vision constamment dégagé pour pouvoir fonctionner correctement. Le dispositif d'essuyage permet donc le maintien du bon fonctionnement du dispositif optique de détection. Ce dernier comprend donc la surface de nettoyage qui correspond à la surface que le balai d'essuyage a pour fonction d'essuyer.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une vue générale d'un dispositif d'essuyage selon l'invention,
[fig 2] est une deuxième vue du système de détection permettant d'observer les détails du dispositif d'essuyage selon l'invention,
[fig 3] est une vue en perspective d'une liaison pivot entre un chariot du dispositif d'essuyage et un levier du dispositif d'essuyage selon une première variante d'un premier mode de réalisation du dispositif d'essuyage,
[fig 4] est une représentation de la mise en place d'une liaison glissière entre le levier et un support de levier d'un ensemble d'entraînement selon la première variante du premier mode de réalisation,
[fig 5] est une illustration de la liaison pivot et de la liaison glissière de la première variante du premier mode de réalisation lorsque le chariot est situé à une extrémité d'un guide,
[fig 6] est une illustration de la liaison pivot et de la liaison glissière de la première variante du premier mode de réalisation lorsque le levier est perpendiculaire au guide,
[fig 7] est une vue en perspective de la liaison pivot et de la liaison glissière entre un chariot du dispositif d'essuyage et un levier du dispositif d'essuyage selon une deuxième variante d'un premier mode de réalisation du dispositif d'essuyage,
[fig 8] est une illustration de la liaison pivot et de la liaison glissière de la deuxième variante du premier mode de réalisation lorsque le chariot est situé à l'extrémité du guide,
[fig 9] est une illustration de la liaison pivot et de la liaison glissière de la deuxième variante du premier mode de réalisation lorsque le levier est perpendiculaire au guide,
[fig 10] est une représentation de la mise en place de la liaison pivot et de la liaison glissière de l'ensemble d'entraînement selon un deuxième mode de réalisation du dispositif d'essuyage.

Le trièdre LVT représente l'orientation du dispositif d'essuyage selon l'invention dans lequel la direction verticale V et la direction transversale T correspondent à des axes définissant un plan d'une surface optique du système de détection, et la direction longitudinale L correspond à un axe perpendiculaire aux deux directions suscitées.

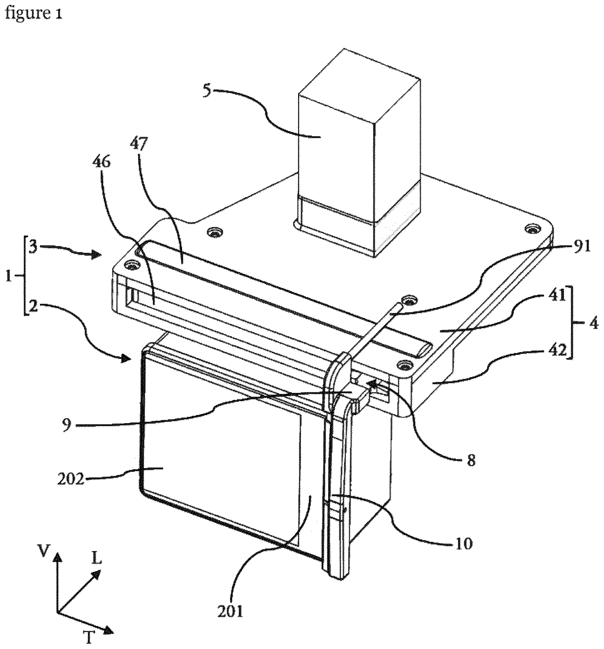

La figure 1 est une représentation d'un système de détection 1 pour véhicule automobile. Le système de détection 1 comprend un dispositif optique de détection 2 surplombé par un dispositif d'essuyage 3. Le dispositif optique de détection 2 comprend au moins une surface optique 201 au moins partiellement couverte par une surface de nettoyage 202. Le dispositif optique de détection 2 peut par exemple être un radar de recul, un dispositif de type Lidar, un radar à ultrasons ou une caméra. Le dispositif optique de détection 2 capte une pluralité de donnée permettant par exemple de créer une image, de détecter une distance, un angle ou une position, et ce par le biais de la surface optique 201. Pour assurer le bon fonctionnement du dispositif optique de détection 2, la surface de nettoyage 202 ne doit donc pas être obstruée, par exemple par des impuretés s'y étant déposées. C'est donc la surface de nettoyage 202 qui est essuyée par le dispositif d'essuyage 3.

Le dispositif d'essuyage 3 comprend un boitier 4. Le boitier 4 définit un volume interne au sein duquel est logé une partie du dispositif d'essuyage 3 tel que cela sera présenté par la suite. Le boitier 4 est divisé en une portion supérieure 41 et une portion inférieure 42. La portion supérieure 41 et la portion inférieure 42 sont fixées entre elle par exemple par vissage d'une pluralité de points de solidarisation 450. Le boitier 4 délimite une ouverture 46 s'étendant principalement selon un plan défini par un axe vertical V et un axe transversal T, soit selon un plan parallèle à la surface de nettoyage 202. Un chariot 8 émerge partiellement de l'ouverture 46 et porte mécaniquement un bras 9 et un balai d'essuyage 10. Le bras 9 et le balai d'essuyage 10 s'étendent principalement selon l'axe vertical V, de sorte à ce que le balai d'essuyage 10 soit au contact de la surface de nettoyage du dispositif optique de détection 2. La dimension principale du balai d'essuyage 10 est parallèle à l'axe vertical V et est supérieure ou égale à une dimension verticale selon l'axe vertical V de la surface de nettoyage 202, de sorte à essuyer l'intégralité de cette dernière selon l'axe vertical V lorsque le dispositif d'essuyage 3 est en marche.

Le bras 9 peut également comprendre un tuyau 91 d'arrivée de fluide relié à un réservoir de fluide, ici non représenté. Le tuyau 91 d'arrivée de fluide peut circuler jusqu'au niveau du balai d'essuyage 10 afin de projeter un fluide, tel que de l'eau ou un fluide de nettoyage, contre la surface de nettoyage 202.

Tel que cela sera décrit en détails par la suite, le chariot 8 est entraîné selon un mouvement rectiligne parallèle à l'axe transversal T, d'une extrémité verticale à l'autre de l'ouverture 46. Le chariot 8 portant le bras 9 et le balai d'essuyage 10, ces derniers sont donc également entraînés selon un mouvement rectiligne parallèle à l'axe transversal T. Le balai d'essuyage 10 effectue donc un mouvement de va-et-vient contre la surface de nettoyage 202 de sorte à essuyer cette dernière. L'ouverture 46 présente une dimension transversale supérieure à une dimension transversale selon l'axe transversal T de la surface de nettoyage 202, de sorte à ce que le balai d'essuyage 10 puisse couvrir l'ensemble de la surface de nettoyage 202 lorsque le dispositif d'essuyage 3 est en fonctionnement. Pour que le déplacement du chariot 8 puisse être opéré au sein du boitier 4 sans encombrement mécanique, la portion supérieure 41 du boîtier 4 comprend un renflement 47. Le renflement 47 permet d'augmenter l'espace du volume interne du boitier 4 afin qu'une partie du chariot 8 puisse y être disposée et que le chariot 8 puisse se mouvoir sans entrer en interférence avec la portion supérieure 41 du boitier 4. Le renflement 47 s'étend principalement selon une direction parallèle à l'axe transversal T, au niveau d'une trajectoire du chariot 8.

Le dispositif d'essuyage 3 comprend également un moteur d'entraînement 5 qui émerge du boitier 4 par le biais de la portion supérieure 41. Du fait des dimensions du moteur d'entraînement 5, ce dernier est majoritairement disposé hors du boitier 4. C'est grâce au moteur d'entraînement 5 que le chariot 8 est entraîné selon un mouvement rectiligne le long de l'ouverture 46.

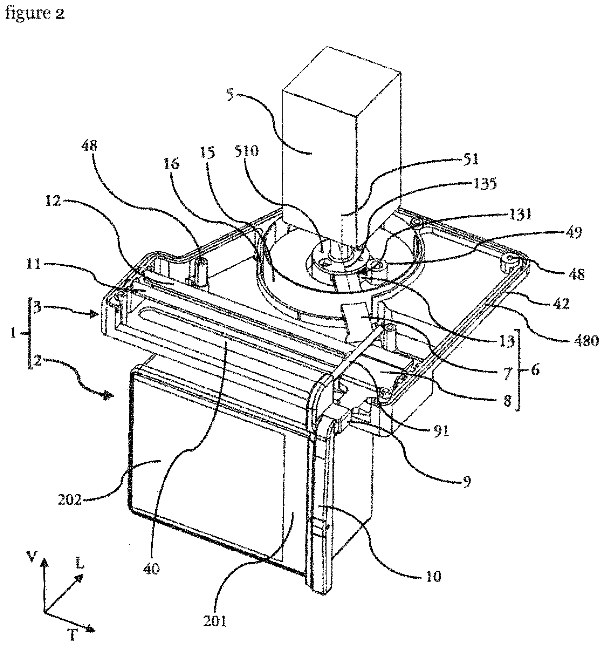

La figure 2 est une représentation du système de détection 1 identique à la figure 1, mais en l'absence de la portion supérieure du boitier ce qui permet d'observer le contenu du boitier. Seule la portion inférieure 42 du boitier est visible, et comprend une pluralité d'organes d'emboitement 48. La portion supérieure du boitier comprend également ces organes d'emboitement 48 afin que les deux portions du boitier puissent être assemblées puis fixées entre elles, par exemple par vissage. La portion inférieure 42 du boitier comprend également une tranchée 480 qui s'étend au moins partiellement sur un pourtour de la portion inférieure 42. La tranchée 480 est configurée pour coopérer par exemple avec une nervure de la portion supérieure du boitier, et ce afin de faciliter la solidarisation entre les deux portions pour fermer le boitier.

Il est ainsi possible d'observer un ensemble d'entraînement 6 composé du chariot 8, d'un levier 7 et d'un support de levier 13. L'ensemble d'entraînement 6 opère une liaison mécanique entre le moteur d'entraînement 5 et le bras 9, afin que ce dernier soit entraîné selon un mouvement rectiligne à partir d'une initiation de mouvement du moteur d'entraînement 5.

Sur la figure 2, le moteur d'entraînement 5 est directement lié au support de levier 13. Le moteur d'entraînement 5 comprend un arbre de rotation 51 représenté en pointillés. L'arbre de rotation 51 tourne selon un mouvement rotatif réversible, c'est-à-dire en alternant les rotations selon un sens horaire et selon un sens antihoraire. L'arbre de rotation 51 est disposé au sein d'une joue 510. C'est la joue 510 qui vient se lier au support de levier 13 par un quelconque moyen de fixation. La joue 510 tourne de manière identique à l'axe de rotation 51 et entraîne donc le support de levier 13 selon le même mouvement rotatif réversible. Il est possible de positionner le moteur d'entraînement 5 différemment, notamment par le biais de raccords 49 disposés sur le boitier.

Le levier 7 s'étend du support de levier 13 jusqu'au chariot 8. Le levier 7, plus particulièrement l'une de ses extrémités interagit avec le support de levier 13 selon une liaison glissière. Autrement dit, le levier 7 est apte à coulisser selon une direction relative à un axe d'allongement principal de celui-ci au sein du support de levier 13. Pour ce faire, le levier 7 est glissé au sein d'une rainure 131 du support de levier 13. La rainure 131 présente des dimensions adaptées aux dimensions du levier 7 afin que ce dernier puisse s'y loger. Ainsi, la rainure 131 s'étend principalement selon un axe d'extension 135, parallèle au levier 7 et sécant avec l'arbre de rotation 51 du moteur d'entraînement 5. La joue 510 vient refermer la rainure 131 afin que le mouvement du levier 7 ne soit limité qu'au coulissement de celui-ci le long de la rainure 131. Lorsque le dispositif d'essuyage 3 est en fonctionnement, le moteur d'entraînement 5 entraîne la rotation du support de levier 13, qui lui-même entraîne un mouvement rotatif du levier 7, relatif à la rotation du support de levier 13.

Il est possible d'observer que le levier 7 s'étend à travers une lame étanche 15 située entre le support de levier 13 et le chariot 8. La lame étanche 15 entoure au moins partiellement le support de levier 13 et protège ainsi ce dernier d'éventuelles projections de fluide pouvant survenir lors du fonctionnement du dispositif d'essuyage 3.

Tel que cela a été décrit précédemment, le chariot 8 porte le bras 9 et entraîne celui-ci selon un mouvement rectiligne parallèle à l'axe transversal T. Pour ce faire, le chariot 8 est lié à un premier guide 11 et à un deuxième guide 12. Les deux guides sont de forme cylindrique et s'étendent de manière parallèle entre eux, et principalement selon une direction parallèle à l'axe transversal T. Les deux guides peuvent être fixés à la portion inférieure 42 du boitier par tout moyen de fixation limitant leurs translations et leurs rotations par rapport au boitier.

Lorsque le dispositif d'essuyage 3 est en fonctionnement, le chariot 8 se déplace le long du premier guide 11 et du deuxième guide 12. La présence des deux guides permet ainsi le maintien de la trajectoire du mouvement rectiligne du chariot 8, et par analogie l'essuyage fiable de la surface de nettoyage 202 par le balai d'essuyage 10 qui demeure positionné en permanence contre cette dernière. Afin que le balai d'essuyage 10 puisse couvrir l'ensemble de la surface de nettoyage 202, les deux guides s'étendent de manière à présenter une dimension parallèle à l'axe transversal T au moins égale à une dimension parallèle à l'axe transversal T de la surface de nettoyage 202 du système de détection 1.

Pour assurer un mouvement rectiligne du chariot 8, ce dernier est entraîné par le levier 7. Avantageusement, le levier 7 et le chariot 8 peuvent par exemple être liés entre eux par une liaison pivot tel que cela sera décrit plus en détails par la suite. Ainsi, lorsque le levier 7 est entraîné selon un mouvement rotatif par le support de levier 13, le chariot 8 est mis en mouvement par le levier 7, et la liaison pivot entre le levier 7 et le chariot 8 entraîne le déplacement de ce dernier sans que ledit déplacement ne soit un mouvement rotatif similaire à celui du levier 7. Par ailleurs, la liaison glissière entre le support de levier 13 et le levier 7 permet à ce dernier de coulisser au sein du support de levier 13. De ce fait, le chariot 8 est apte à se déplacer le long des deux guides selon un mouvement rectiligne, et ce sans que le levier 7, plus particulièrement son mouvement rotatif, n'interfère mécaniquement avec ledit mouvement rectiligne du chariot 8, étant donné que la distance entre le support de levier 13 et le chariot 8 diffère selon la position de ce dernier le long des deux guides.

Comme cela a été dit précédemment, le mouvement de rotation du moteur d'entraînement 5 est réversible. Pour cela, le moteur d'entraînement 5 peut par exemple être un moteur d'entraînement 5 réversible, ou bien inclure un mécanisme de réversibilité. Le moteur d'entraînement 5 étant lié au support de levier 13, ce dernier, ainsi que le levier 7, se meuvent également selon un mouvement de rotation réversible. Une plage de mouvement du moteur d'entraînement 5, du support de levier 13 et du levier 7 correspond donc à un secteur angulaire dont les dimensions sont déterminées en fonction de l'activité du moteur d'entraînement 5. Un tel mouvement de rotation réversible permet donc au chariot 8 de se déplacer selon un mouvement rectiligne réversible, c'est-à-dire dans un premier sens sur une distance déterminé le long d'un axe déterminé, puis dans un second sens opposé au premier sens, sur la même distance déterminée et le long du même axe déterminé. Autrement dit, le chariot 8 effectue des allers-retours le long du premier guide 11 et du deuxième guide 12 sous l'influence du mouvement rotatif réversible du levier 7. Le secteur angulaire de la plage de mouvement du moteur d'entraînement 5, du support de levier 13 et du levier 7 est avantageusement déterminé de sorte à ce que le chariot 8 se déplace sur l'intégralité des deux guides sans toutefois entrer en collision avec la portion inférieure 42 du boitier. Le mouvement rectiligne réversible du chariot 8 entraîne donc un mouvement de va-et-vient du balai d'essuyage 10 contre la surface de nettoyage 202, assurant ainsi la fonction du dispositif d'essuyage 3 au sein du système de détection 1.

Il est possible d'observer une rigole 40 formé dans la portion inférieure 42 du boitier. La rigole 40 s'étend principalement de manière parallèle à l'axe transversal T et est situé au niveau de la trajectoire du chariot 8. A l'instar du renflement de la portion supérieure du boitier, la rigole 40 permet d'augmenter l'espace du volume interne du boitier 4 afin qu'une partie du chariot 8 puisse y être disposée et que le chariot 8 puisse se mouvoir sans entrer en interférence avec la portion inférieure 42 du boîtier.

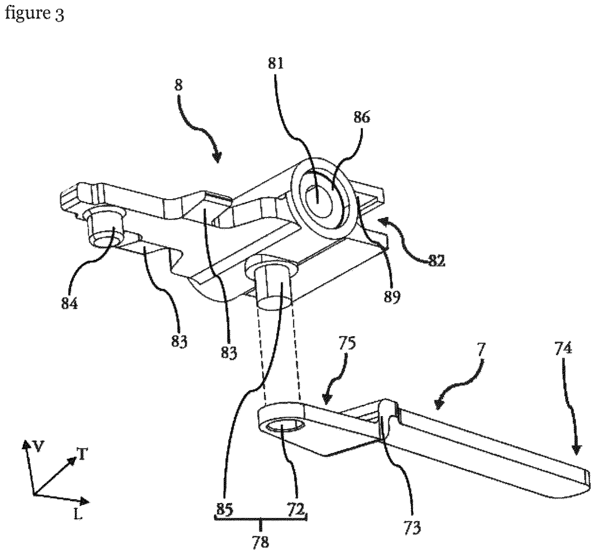

La figure 3 est une vue en perspective du chariot 8 et du levier 7. Le chariot 8 s'étend principalement selon une direction parallèle à un axe longitudinal L, afin de pouvoir émerger du boitier au travers de l'ouverture tel que cela est représenté sur les figures précédentes.

Le chariot 8 comprend un alésage 81 traversant le chariot 8 de part en part selon une direction parallèle à l'axe transversal T. L'alésage 81 présente une forme cylindrique au sein de laquelle vient s'insérer un manchon 86. Le manchon 86 présente également une forme cylindrique et ses dimensions sont telles qu'il puisse être logé au sein de l'alésage 81. Le manchon 86 présente une dimension relative à l'axe transversal T inférieure à une dimension relative à l'axe transversal T de l'alésage 81, et ce de façon à ce que le manchon 86 n'interfère par mécaniquement en émergeant de l'alésage 81. Le manchon 86 peut être fixé dans l'alésage 81 par exemple par collage. Ceci étant fait, le premier guide peut être inséré au sein du manchon 86. L'interaction entre l'alésage 81, le manchon 86 et le premier guide forme alors une liaison glissière du chariot 8. Le manchon 86 assure une fonction anti-frottements, afin que le chariot 8 puisse se mouvoir le long du premier guide de manière fluide.

Le chariot 8 comprend également une encoche 82 à l'une de ses extrémités longitudinales, l'encoche 82 étant juxtaposée à l'alésage 81. L'encoche 82 présente une forme de U vu dans un plan LV, et dont une portion ouverte est orientée à l'opposé de l'alésage 81. L'encoche 82 est configurée pour loger le deuxième guide visible sur la figure 2. La fixation entre ce dernier et l'encoche 82 peut se faire par exemple par clipsage. L'encoche 82 comprend également un logement 89 sur l'une de ses parois internes. Le logement 89 est apte à accueillir un patin permettant de limiter la friction entre le deuxième guide et l'encoche 82 du chariot 8.

L'alésage 81 est interposée entre l'encoche 82 et un organe d'accroche 84, situé à l'extrémité du chariot 8. L'organe d'accroche 84 est disposé à l'extrémité émergeant du boitier et a pour fonction de porter le bras, et d'entraîner celui-ci dans son mouvement rectiligne. L'organe d'accroche 84 peut être de nature diverse, l'essentiel étant qu'il assure le maintien du bras sans entraîner d'interférences mécaniques.

Le chariot 8 comprend également un pivot 85. C'est par l'intermédiaire du pivot 85 qu'est effectuée la liaison entre le chariot 8 et le levier 7. Comme cela a été dit précédemment, c'est le levier 7 qui entraîne le chariot 8 en mouvement le long des guides. Le levier 7 entraîne donc le chariot 8 par le biais du pivot 85, tout en effectuant librement un mouvement de rotation autour de celui-ci. Le pivot 85 est avantageusement disposé au niveau de l'alésage 81 car c'est au niveau du premier guide qu'est basé le mouvement du chariot 8.

Avantageusement, le chariot 8 peut comprendre des excroissances 83. Les excroissances 83 sont par exemple au nombre de deux, et sont disposées de manière symétrique entre elles par rapport à un plan de symétrie du chariot 8 parallèle au plan LV. Les excroissances 83 sont mises en place au niveau d'une partie du chariot 8 disposée en regard de l'ouverture du boitier et font saillie du chariot 8 selon une direction parallèle à l'axe transversal T. Les excroissances 83 sont utilisées en coopération avec l'ouverture du boitier quand cette dernière est équipée d'un dispositif d'étanchéité du volume interne formé par exemple par un joint à lèvres. Ainsi, lorsque le chariot 8 est en mouvement, les excroissances 83 permettent d'ouvrir un passage à travers le joint à lèvres pour que le chariot 8 puisse se déplacer le long de l'ouverture, et ce dans les deux sens du mouvement rectiligne du chariot 8. Afin de faciliter le passage du chariot 8 à travers le joint à lèvres, chaque excroissance présente une forme conique permettant d'ouvrir le joint à lèvres de manière progressive et fluide.

Le mouvement du chariot 8 est initié par le levier 7. La liaison entre le levier 7 et le chariot 8 correspond à une première variante d'un premier mode de réalisation du dispositif d'essuyage selon l'invention. Le levier 7 est visible sur la figure 3, notamment une extrémité liée au chariot 8. Le levier 7 comprend une première extrémité longitudinale 74 et une deuxième extrémité longitudinale 75. La première extrémité longitudinale 74 interagit avec le support de levier tel que cela sera décrit en détails par la suite. La deuxième extrémité longitudinale 75 interagit avec le chariot 8. Pour cela, la deuxième extrémité longitudinale 75 du levier 7 est pourvue d'un orifice 72 au sein duquel vient s'insérer le pivot 85 du chariot 8. L'association entre l'orifice 72 du levier 7 et le pivot 85 du chariot 8 forme la liaison pivot 78 selon la première variante du premier mode de réalisation du dispositif d'essuyage. La liaison pivot 72 pivote librement autour du pivot 85. Ainsi le levier 7 entraîne un mouvement translatif du chariot 8 sans générer un mouvement rotatif de celui-ci.

Afin que le levier 7 puisse être lié au chariot 8, le levier 7 comprend un dénivellement 73. Le dénivellement 73 présente une forme de S et permet d'adapter la position verticale du levier 7 par rapport au chariot 8 afin que la liaison pivot 78 puisse se faire sans interférences mécaniques.

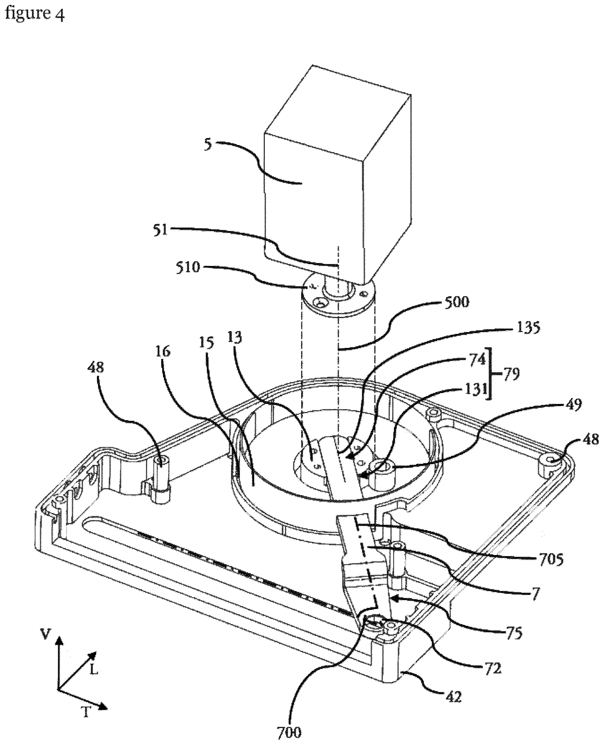

La figure 4 est une représentation de la mise en place de la liaison de la liaison glissière 79 selon la première variante du premier mode de réalisation. La première extrémité longitudinale 74 du levier 7 est mise en place dans la rainure 131 du support de levier 13 afin de former la liaison glissière 79. Le levier 7 est également glissé à travers un organe de mise en mouvement de la lame étanche 15, afin que cette dernière puisse suivre le mouvement rotatif du levier 7 sans interférer mécaniquement. A l'opposé du support de levier 13, le levier 7 comprend l'orifice 72 qui permet la liaison pivot avec le chariot, ici non représenté.

Lorsque le moteur d'entraînement 5 est mis en place sur le support de levier 13 par le biais de l'arbre de rotation 51 et de la joue 510, la rainure 131 du support de levier 13 est ainsi refermée par la joue 510 du moteur d'entraînement 5 afin d'empêcher tout mouvement selon l'axe vertical V du levier 7 par rapport au support de levier 13. L'arbre de rotation 51 s'étend principalement selon l'axe vertical V et tourne autour d'un axe de rotation 500. Le moteur d'entraînement 5, lorsque le dispositif d'essuyage est en fonctionnement, entraîne le support de levier 13 selon un mouvement de rotation, et entraîne en mouvement le levier 7 grâce à la rainure 131. Le levier 7 effectue un mouvement rotatif et entraîne également en mouvement la lame étanche 15 par le biais de l'organe de mise en mouvement. La lame étanche 15 coulisse alors le long d'une gorge 16 créée au niveau de la portion inférieure 42 du boitier. La gorge 16 peut par exemple être moulée au niveau de la portion inférieure 42 du boitier et entoure au moins partiellement le support de levier 13. La lame étanche 15 se déplace au sein de la gorge 16 selon un mouvement en phase avec celui du levier 7. La gorge 16 présente une longueur d'arc de cercle supérieure à celle de la lame étanche 15 afin que cette dernière puisse avoir un degré de liberté au sein de la gorge 16, ledit degré de liberté devant être proportionnel à l'amplitude du mouvement rotatif du levier 7. Ainsi, le support de levier 13 est ainsi protégé d'éventuelles projections de fluide par le biais de la lame étanche 15, sans pour autant que cette dernière ne gêne mécaniquement le mouvement du levier 7.

Le levier 7 se déplace le long d'un plan de déplacement 700, ce dernier étant délimité par l'axe d'allongement principal 705 du levier 7 et par l'axe transversal T. Dans ce premier mode de réalisation de l'ensemble d'entraînement, l'axe de rotation 500 de l'arbre de rotation 51 du moteur d'entraînement 5 coupe le plan de déplacement 700 du levier 7. De manière plus précise, l'axe de rotation 500 est perpendiculaire au plan de déplacement 700.

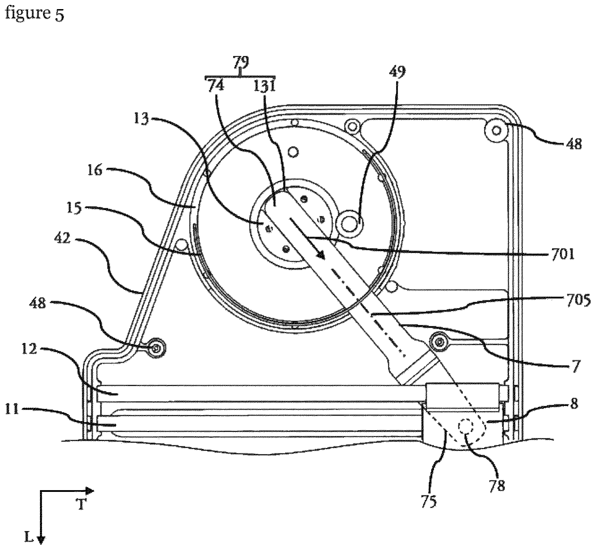

La figure 5 illustre le mécanisme de la liaison pivot 78 et de la liaison glissière 79 en fonction de la position du levier 7 et du chariot 8, vu du dessus, et selon la première variante du premier mode de réalisation. La figure 5 représente une première position où le chariot 8 est situé à une extrémité transversale du premier guide 11. 1

Comme cela a été décrit précédemment, lorsque le dispositif d'essuyage est en fonctionnement, le moteur d'entraînement, ici non représenté, entraîne en rotation le support de levier 13, et par analogie le levier 7, selon un mouvement rotatif réversible. Le chariot 8, quant à lui, se déplace selon un mouvement rectiligne réversible, le long du premier guide 11, notamment par le biais de la liaison pivot 78, représentée en pointillées, et qui associe l'orifice du levier 7 au pivot du chariot 8. La liaison glissière 79 entre le support de levier 13, plus particulièrement la rainure 131, et la première extrémité longitudinale 74 du levier 7 permet à ce dernier de coulisser dans le support de levier 13 alors que la distance qui sépare ce support de levier 13 du premier guide 11 diminue. En effet, lorsque le chariot 8 se déplace le long du premier guide 11, la distance entre le chariot 8 et le support de levier 13 est variable selon si le chariot 8 est à une extrémité transversale des guides ou s'il est situé à un niveau intermédiaire entre les extrémités transversales des deux guides.

Lorsque le chariot 8 est au niveau d'une des extrémités transversales des deux guides, le levier 7 se déplace par un premier coulissement 701 afin de couvrir la distance entre le chariot 8 et le support de levier 13. Le premier coulissement 701 s'effectue de manière orientée vers le chariot 8, sous l'influence du mouvement rotatif du support de levier 13 et du mouvement du chariot 8 le long du premier guide 11. La liaison glissière 79 permet ainsi au levier 7 d'accompagner le chariot 8 jusqu'aux extrémités transversales des guides

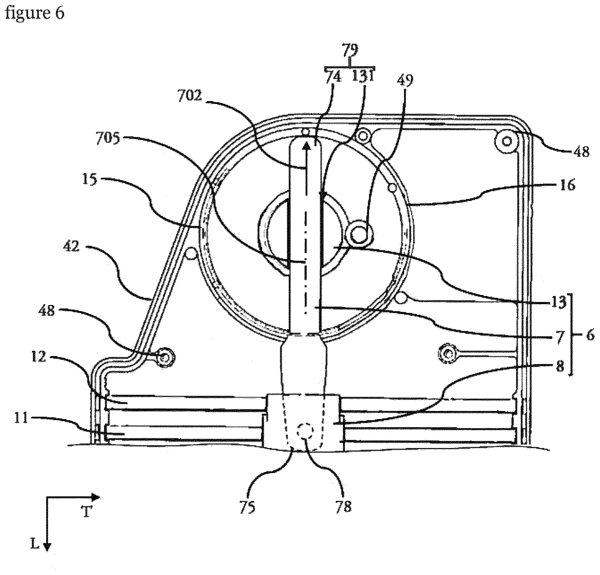

La figure 6 illustre l'ensemble d'entraînement 6, toujours selon la première variante du premier mode de réalisation, lorsque l'axe d'allongement principal 705 du levier 7 est perpendiculaire à la dimension principale du premier guide 11. Autrement dit, l'axe d'allongement principal 705 du levier 7 s'étend selon une direction parallèle à l'axe longitudinal L. Dans une telle situation, la distance entre le chariot 8 et le support de levier 13 est inférieure à celle de la situation exposée en figure 5, c'est-à-dire lorsque le chariot 8 est situé à l'une des extrémités transversales du premier guide. Ainsi, le levier 7 coulisse dans le support de levier 13 par un deuxième coulissement 702 orienté à l'opposé du chariot 8. Comme cela est visible sur la figure 6, le levier 7 traverse entièrement le support de levier 13 et débouche donc de celui-ci. La liaison glissière 79 permet donc à l'ensemble d'entraînement 6 d'entraîner un mouvement rectiligne du bras et du balai d'essuyage à partir du mouvement rotatif du moteur d'entraînement, et ce sans que chacune des pièces de l'ensemble d'entraînement 6, à savoir le support de levier 13, le levier 7 et le chariot 8, n'interfèrent mécaniquement entre elles.

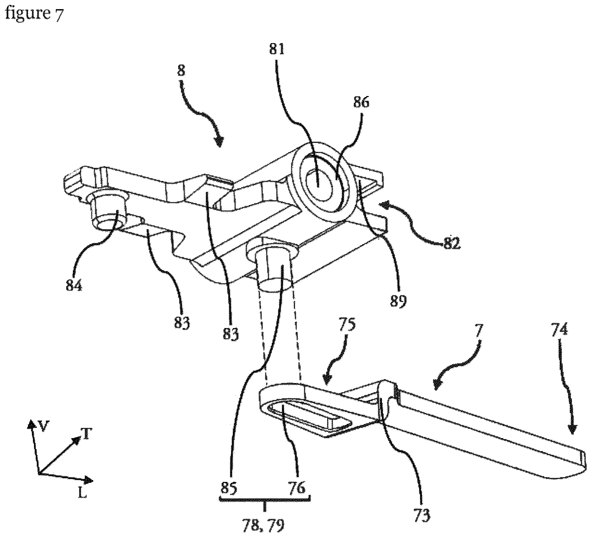

La figure 7 représente le levier 7 et le chariot 8 selon une deuxième variante du premier mode de réalisation du dispositif d'essuyage. Selon cette deuxième variante, la liaison pivot 78 et la liaison glissière 79 sont toutes deux mises en place entre le levier 7 et le chariot 8. Selon cette deuxième variante, le chariot 8 est identique par rapport à la première variante. On se reportera donc à la description de la figure 3 pour la description détaillée du chariot 8.

La deuxième extrémité longitudinale 75 du levier 7 comprend pour cette deuxième variante une lumière 76. La lumière 76 se présente sous la forme d'un trou présentant une forme oblongue. La forme oblongue de la lumière 76 s'étend de manière parallèle à l'axe d'allongement principal 705 du levier 7. La lumière 76 est apte à recevoir le pivot 85 du chariot 8 qui peut s'y insérer. Tout comme pour la première variante, le levier 7 peut pivoter librement autour du pivot 85 du chariot 8. Par ailleurs, la forme oblongue de la lumière 76 du levier 7 permet le coulissement du pivot 85 le long de la lumière 76. Ainsi, l'association entre le pivot 85 du chariot 8 et la lumière 76 du levier 7 forme à la fois, selon cette deuxième variante, la liaison pivot 78 et la liaison glissière 79.

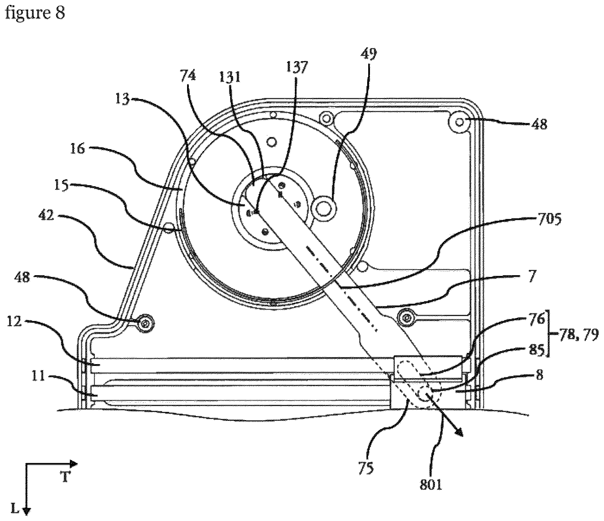

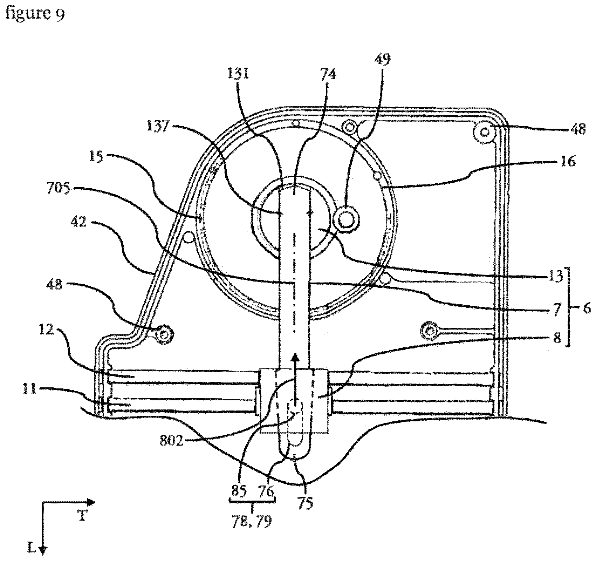

Les figures 8 et 9 illustrent le mécanisme de la liaison pivot 78 et de la liaison glissière 79 en fonction de la position du levier 7 et du chariot 8, vu du dessus, et selon la deuxième variante du premier mode de réalisation. Tout comme pour les figures 5 et 6, deux positions sont représentées. La première position, où le chariot 8 est situé à une extrémité transversale du premier guide 11, est représentée en figure 8. La deuxième position, où l'axe d'allongement principal 705 du levier 7 est perpendiculaire au premier guide 11, est représentée en figure 9. Sur les figures 8 et 9, il est possible d'observer que la première extrémité longitudinale 74 du levier 7 est liée au support de levier 13 par une liaison complète 137. La liaison complète 137 maintient le levier 7 au sein de la rainure 131 de manière totalement figée. Ainsi, en ce qui concerne la deuxième variante du premier mode de réalisation, aucun mouvement du levier 7 n'est opéré de manière relative au support de levier 13.

Le levier 7 est entraîné en rotation par le support de levier 13, et entraîne le chariot 8 en mouvement grâce à la liaison pivot 78 tout en tournant librement autour du pivot 85 du chariot 8. Lorsque le chariot 8 est entraîné en mouvement rectiligne vers une extrémité transversale du premier guide 11, la distance entre le support de levier 13 et le chariot 8 augmente. Ainsi, le pivot 85 coulisse le long de la lumière 76 selon un premier sens de coulissement 801, et ce afin que le chariot 8 atteigne l'extrémité transversale du premier guide 11 sans interférence avec le levier 7.

Sur la figure 9, lorsque l'axe d'allongement principal 705 du levier 7 est perpendiculaire au premier guide 11, la distance entre le support de levier 13 et le chariot 8 diminue. Le pivot 85 coulisse alors le long de la lumière 76 selon un deuxième sens de coulissement 802. Ainsi, selon la deuxième variante du premier mode de réalisation, la liaison pivot 78 et la liaison glissière 79 sont toutes deux faites par la lumière 76 et la pivot 85. La liaison pivot 78 permet au levier 7 de mettre en mouvement le chariot 8. La liaison glissière permet au pivot 85 de coulisser le long de la lumière 76 afin de ne pas créer d'interférences mécaniques entre le levier 7 et le chariot 8 étant donné que, contrairement à la première variante, la liaison complète 137 fige le levier 7 au sein du support de levier 13.

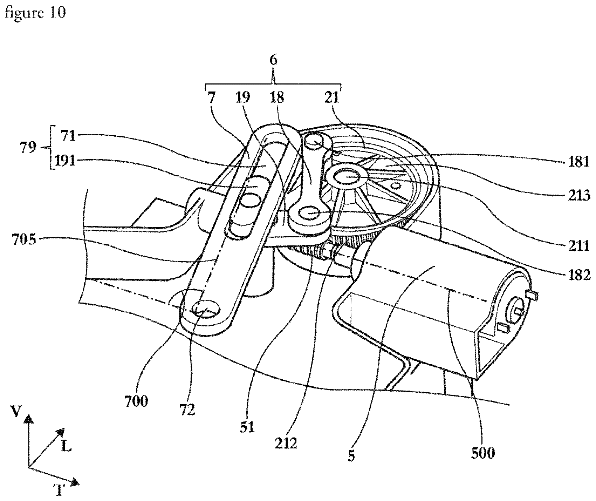

La figure 10 présente un deuxième mode de réalisation du dispositif d'essuyage, plus particulièrement de la disposition du moteur d'entraînement 5 et de l'ensemble d'entraînement 6. Au sein de ce deuxième mode de réalisation, le moteur d'entraînement 5 comprend toujours son arbre de rotation 51 qui s'étend le long de l'axe de rotation 500. Contrairement au premier mode de réalisation, l'axe de rotation 500 s'étend de manière parallèle à l'axe transversal T.

L'arbre de rotation 51 est au contact d'une roue dentée 21, plus précisément contre une tranche 212 de celle-ci, ladite tranche 212 étant pourvue de dents. La roue dentée 21 s'étend principalement selon l'axe longitudinal L et l'axe transversal T. Afin d'interagir avec la roue dentée 21, l'arbre de rotation 51 du moteur d'entraînement 5 peut par exemple être une vis sans fin dont un pas présente une complémentarité de forme avec les dents de la roue dentée 21. Ainsi, lorsque le moteur d'entraînement 5 est mis en fonctionnement, la vis sans fin tourne sur elle-même et de ce fait entraîne la roue dentée 21 en rotation, la rotation étant unidirectionnelle c'est-à-dire uniquement dans le sens horaire ou le sens anti-horaire.

La roue dentée 21 est également liée à une bielle 18. La bielle 18 présente une première attache 181, située à une extrémité de la bielle 18 et reliée à une face 213 de la roue dentée. Lorsque la roue dentée 21 est entraînée en rotation par l'arbre de rotation 51 du moteur d'entraînement 5, la première attache 181 de la bielle 18 effectue également un mouvement rotatif, ce dernier étant circulaire et unidirectionnel autour d'un centre 211 de la roue dentée 21.

La bielle 18 comprend une deuxième attache 182, située à l'extrémité opposée à la première attache 181. La deuxième arrache 182 est liée à un palier d'entraînement 19. La deuxième attache 182 de la bielle 18 entraîne le palier d'entraînement 19 dans un mouvement d'oscillation. Le mécanisme de la bielle 18 fait que, malgré le mouvement rotatif unidirectionnel de la roue dentée 21 et de la première attache 181 de la bielle 18, la deuxième attache 182 de la bielle 18 entraîne le palier d'entraînement 19 selon un mouvement rotatif réversible, c'est-à-dire une oscillation. Le mouvement rotatif réversible du palier d'entraînement 19 est donc initiateur du mouvement rotatif réversible du levier 7 et du mouvement rectiligne réversible du chariot, ici non représenté.

Dans ce deuxième mode de réalisation, le levier 7 comprend toujours l'orifice 72 permettant la liaison pivot au chariot portant le bras et le balai d'essuyage, mais également, à son extrémité opposée, un trou oblong 71, par exemple traversant une dimension verticale du levier 7 selon l'axe vertical V et s'étendant principalement selon l'axe d'allongement principal 705 du levier 7. Le palier d'entraînement 19 comprend un maneton 191 présentant des dimensions adaptées pour son insertion dans le trou oblong 71 du levier 7. Ainsi, c'est la liaison entre le trou oblong 71 du levier 7 et le maneton 191 du palier d'entraînement 19 qui fait office de liaison glissière 79 dans ce deuxième mode de réalisation. Le maneton 191 permet d'empêcher tout mouvement du levier 7, à l'exception du mouvement rotatif réversible transmis par l'intermédiaire du palier d'entraînement 19, et du coulissement du levier 7 le long du maneton 191.

Le maneton 191 est solidaire du palier d'entraînement 19. Ainsi, le mouvement du maneton 191 est identique à celui du palier d'entraînement 19, à savoir un mouvement rotatif réversible. Le centre du maneton 191 reste immobile, seules ses extrémités sont en mouvement. De cette manière, le maneton 191 entraîne le levier 7 en mouvement rotatif réversible. Le levier 7 peut en revanche se déplacer le long de son axe d'allongement principal 705 et ainsi compenser l'augmentation ou la réduction de la distance qui sépare le chariot du maneton 191.

La liaison entre le levier 7 et le chariot ont été abordés précédemment dans la description du premier mode de réalisation et sont transposables pour ce deuxième mode de réalisation. Le mouvement rotatif du levier 7 et le mouvement rectiligne du chariot n'interfèrent pas entre eux grâce au coulissement du levier 7 le long du maneton 191. Il est à noter qu'une amplitude du mouvement rotatif du levier 7 est dépendante de la taille d'un diamètre de la roue dentée 21, mais également de la distance entre la première attache 181 de la bielle 18 et le centre 211 de la roue dentée 21. Le levier 7 est mis en mouvement selon le plan de déplacement 700, qui ici est parallèle et non sécant à l'axe de rotation 500 de l'arbre de rotation 51 du moteur d'entraînement 5.

Dans ce deuxième mode de réalisation, l'ensemble d'entraînement 6 est donc composé de la roue dentée 21, de la bielle 18, du palier d'entraînement 19, ce dernier comprenant le maneton 191, du levier 7 et du chariot. Ce deuxième mode de réalisation permet, à partir d'un mouvement rotatif unidirectionnel de l'arbre de rotation 51 du moteur d'entraînement 5, de transmettre un mouvement de va-et-vient rectiligne au balai d'essuyage, afin que ce dernier puisse assurer sa fonction d'essuyage contre la surface de nettoyage du système de détection.

Bien sûr, l'invention n'est pas limitée aux exemples qui viennent d'être décrits et de nombreux aménagements peuvent être apportés à ces exemples sans sortir du cadre de l'invention.

L'invention, telle qu'elle vient d'être décrite, atteint bien le but qu'elle s'était fixée, et permet de proposer un dispositif d'essuyage muni d'un moteur d'entraînement et d'un ensemble d'entraînement comprenant une liaison pivot et une liaison glissière permettant de convertir un mouvement rotatif en un mouvement rectiligne sans interférences mécaniques. Des variantes non décrites ici pourraient être mises en oeuvre sans sortir du contexte de l'invention, dès lors que, conformément à l'invention, elles comprennent un dispositif d'essuyage conforme à l'invention.

## Revendications

1. Dispositif d'essuyage (3) pour système de détection (1) d'un véhicule, comprenant un bras (9), un balai d'essuyage (10), un moteur d'entraînement (5) du bras (9), et un ensemble d'entraînement (6) comportant un chariot (8) à déplacement rectiligne et reliant le moteur d'entraînement (5) et le bras (9), ledit bras (9) étant porté par ledit chariot (8), **caractérisé en ce que** l'ensemble d'entraînement (6) comprend au moins une liaison pivot (78) et au moins une liaison glissière (79) interposées entre le moteur d'entraînement (5) et le bras (9), et **en ce que** l'ensemble d'entraînement (6) comprend au moins un levier (7), la liaison pivot (78) étant disposée entre le levier (7) et le chariot (8).

2. Dispositif d'essuyage (3) selon la revendication 1, dans lequel la liaison glissière (79) est disposée entre le moteur d'entraînement (5) et le levier (7).

3. Dispositif d'essuyage (3) selon la revendication 2, dans lequel l'ensemble d'entraînement (6) comprend au moins un support de levier (13) lié en rotation à un arbre de rotation (51) du moteur d'entraînement (5), le levier (7) comprenant une première extrémité longitudinale (74), la liaison glissière (79) étant réalisée par un coulissement de la première extrémité longitudinale (74) par rapport au support de levier (13).

4. Dispositif d'essuyage selon la revendication 3, dans lequel le support de levier (13) comprend une rainure (131) dans laquelle est logée la première extrémité longitudinale (74) du levier (7), la rainure (131) s'étendant le long d'un axe d'extension (135) sécant avec un axe de rotation (500) de l'arbre de rotation (51) du moteur d'entraînement (5).

5. Dispositif d'essuyage (3) selon la revendication 4, dans lequel l'arbre de rotation (51) du moteur d'entraînement (5) comprend une joue (510) solidaire du support de levier (13) et qui ferme la rainure (131).

6. Dispositif d'essuyage (3) selon la revendication 1, dans lequel la liaison glissière (79) est disposée entre le chariot (8) et le levier (7).

7. Dispositif d'essuyage (3) selon la revendication 6, dans lequel l'ensemble d'entraînement (6) comprend un support de levier (13), le levier (7) étant relié au support de levier (13) par une liaison complète (137).

8. Dispositif d'essuyage (3) selon la revendication 6 ou 7, dans lequel le chariot (8) comprend un pivot (85), le levier (7) comprenant une seconde extrémité longitudinale (75) qui comporte une lumière (76), la liaison glissière (79) et la liaison pivot (78) étant réalisées par un coulissement et une rotation de la deuxième extrémité longitudinale (75) par rapport au pivot (85).

9. Dispositif d'essuyage (3) selon la revendication 1, dans lequel l'ensemble d'entraînement (6) comprend au moins une roue dentée (21) mise en mouvement par un arbre de rotation (51) du moteur d'entraînement (5), une bielle (18) entraînée par la roue dentée (21) et un palier d'entraînement (19) mis en mouvement par la bielle (18) et qui entraîne le levier (7).

10. Dispositif d'essuyage (3) selon la revendication 9, dans lequel le palier d'entraînement (19) comprend un maneton (191) logé dans un trou oblong (71) ménagé sur le levier (7).

11. Dispositif d'essuyage (3) selon l'une quelconque des revendications précédentes, dans lequel le chariot (8) est configuré pour se déplacer de manière rectiligne sur un guide (11, 12).

12. Système de détection (1) d'un véhicule, comprenant un dispositif optique de détection (2) et un dispositif d'essuyage (3) selon l'une quelconque des revendications précédentes.

## Patentansprüche

1. Wischvorrichtung (3) für ein Detektionssystem (1) eines Fahrzeugs, welches einen Arm (9), ein Wischblatt (10), einen Antriebsmotor (5) des Armes (9) und eine Antriebsanordnung (6), die einen geradlinig beweglichen Schlitten (8) aufweist und den Antriebsmotor (5) und den Arm (9) verbindet, umfasst, wobei der Arm (9) von dem Schlitten (8) getragen wird, **dadurch gekennzeichnet, dass** die Antriebsanordnung (6) mindestens eine Schwenkverbindung (78) und mindestens eine Gleitverbindung (79) umfasst, die zwischen dem Antriebsmotor (5) und dem Arm (9) angeordnet sind, und dadurch, dass die Antriebsanordnung (6) mindestens einen Hebel (7) umfasst, wobei die Schwenkverbindung (78) zwischen dem Hebel (7) und dem Schlitten (8) angeordnet ist.

2. Wischvorrichtung (3) nach Anspruch 1, wobei die Gleitverbindung (79) zwischen dem Antriebsmotor (5) und dem Hebel (7) angeordnet ist.

3. Wischvorrichtung (3) nach Anspruch 2, wobei die Antriebsanordnung (6) mindestens einen Hebelträger (13) umfasst, der mit einer Drehwelle (51) des Antriebsmotors (5) drehfest verbunden ist, wobei der Hebel (7) ein erstes Längsende (74) umfasst, wobei die Gleitverbindung (79) durch ein Gleiten des ersten Längsendes (74) bezüglich des Hebelträgers (13) hergestellt wird.

4. Wischvorrichtung nach Anspruch 3, wobei der Hebelträger (13) eine Nut (131) umfasst, in der das erste Längsende (74) des Hebels (7) aufgenommen ist, wobei sich die Nut (131) entlang einer Erstreckungsachse (135) erstreckt, die sich mit einer Drehachse (500) der Drehwelle (51) des Antriebsmotors (5) schneidet.

5. Wischvorrichtung (3) nach Anspruch 4, wobei die Drehwelle (51) des Antriebsmotors (5) eine Wange (510) umfasst, welche mit dem Hebelträger (13) fest verbunden ist und welche die Nut (131) verschließt.

6. Wischvorrichtung (3) nach Anspruch 1, wobei die Gleitverbindung (79) zwischen dem Schlitten (8) und dem Hebel (7) angeordnet ist.

7. Wischvorrichtung (3) nach Anspruch 6, wobei die Antriebsanordnung (6) einen Hebelträger (13) umfasst, wobei der Hebel (7) mit dem Hebelträger (13) durch eine vollständige Verbindung (137) verbunden ist.

8. Wischvorrichtung (3) nach Anspruch 6 oder 7, wobei der Schlitten (8) einen Drehzapfen (85) umfasst, wobei der Hebel (7) ein zweites Längsende (75) umfasst, das einen Schlitz (76) aufweist, wobei die Gleitverbindung (79) und die Schwenkverbindung (78) durch ein Gleiten und eine Drehung des zweiten Längsendes (75) bezüglich des Drehzapfens (85) hergestellt werden.

9. Wischvorrichtung (3) nach Anspruch 1, wobei die Antriebsanordnung (6) mindestens ein Zahnrad (21), das von einer Drehwelle (51) des Antriebsmotors (5) in Bewegung versetzt wird, eine von dem Zahnrad (21) angetriebene Schubstange (18) und ein Antriebslager (19), das von der Schubstange (18) in Bewegung versetzt wird und das den Hebel (7) antreibt, umfasst.

10. Wischvorrichtung (3) nach Anspruch 9, wobei das Antriebslager (19) einen Zapfen (191) umfasst, der in einem am Hebel (7) ausgebildeten Langloch (71) aufgenommen ist.

11. Wischvorrichtung (3) nach einem der vorhergehenden Ansprüche, wobei der Schlitten (8) dafür ausgelegt ist, sich geradlinig auf einer Führung (11, 12) zu bewegen.

12. Detektionssystem (1) eines Fahrzeugs, das eine optische Detektionsvorrichtung (2) und eine Wischvorrichtung (3) nach einem der vorhergehenden Ansprüche umfasst.

## Claims

1. Wiping device (3) for a detection system (1) of a vehicle, comprising an arm (9), a wiper (10), a drive motor (5) for the arm (9), and a drive assembly (6) comprising a carriage (8) that moves rectilinearly and connects the drive motor (5) and the arm (9), said arm (9) being carried by said carriage (8), **characterized in that** the drive assembly (6) comprises at least one pivot connection (78) and at least one sliding connection (79), which are interposed between the drive motor (5) and the arm (9), and **in that** the drive assembly (6) comprises at least one lever (7), the pivot connection (78) being disposed between the lever (7) and the carriage (8).

2. Wiping device (3) according to Claim 1, wherein the sliding connection (79) is disposed between the drive motor (5) and the lever (7).

3. Wiping device (3) according to Claim 2, wherein the drive assembly (6) comprises at least one lever support (13) rotationally connected to a rotary shaft (51) of the drive motor (5), the lever (7) comprising a first longitudinal end (74), the sliding connection (79) being realized by the first longitudinal end (74) sliding with respect to the lever support (13).

4. Wiping device according to Claim 3, wherein the lever support (13) comprises a slot (131) in which the first longitudinal end (74) of the lever (7) is accommodated, the slot (131) extending along an extension axis (135) that intersects an axis of rotation (500) of the rotary shaft (51) of the drive motor (5).

5. Wiping device (3) according to Claim 4, wherein the rotary shaft (51) of the drive motor (5) comprises a flange (510) which is secured to the lever support (13) and which closes the slot (131).

6. Wiping device (3) according to Claim 1, wherein the sliding connection (79) is disposed between the carriage (8) and the lever (7).

7. Wiping device (3) according to Claim 6, wherein the drive assembly (6) comprises a lever support (13), the lever (7) being connected to the lever support (13) by a complete connection (137).

8. Wiping device (3) according to Claim 6 or 7, wherein the carriage (8) comprises a pivot pin (85), the lever (7) comprising a second longitudinal end (75) which has an aperture (76), the sliding connection (79) and the pivot connection (78) being realized by the second longitudinal end (75) sliding and rotating with respect to the pivot pin (85).

9. Wiping device (3) according to Claim 1, wherein the drive assembly (6) comprises at least one gear wheel (21) set in motion by a rotary shaft (51) of the drive motor (5), a connecting rod (18) driven by the gear wheel (21) and a drive bearing (19) which is set in motion by the connecting rod (18) and which drives the lever (7).

10. Wiping device (3) according to Claim 9, wherein the drive bearing (19) comprises a crank pin (191) accommodated in an elongate hole (71) provided in the lever (7).

11. Wiping device (3) according to any one of the preceding claims, wherein the carriage (8) is configured to move rectilinearly on a guide (11, 12).

12. Detection system (1) of a vehicle, comprising an optical detection device (2) and a wiping device (3) according to any one of the preceding claims.
